# EUROPEAN PATENT SPECIFICATION

(11) **EP 0 913 320 B1**
(45) Date of publication and mention of the grant of the patent: **21.05.2003**
(21) Application number: 98203523.0
(22) Date of filing: 21.10.1998
(51) Int. Cl.: B62D 25/18

(54) **Supporting device for the mudguard of an agricultural machine in particular the front mudguard of a tractor**
Befestigung für einen Kotflügel für eine landwirtschaftliche Maschine, insbesondere vorderer Kotflügel eines Landwirtschaftstraktors
Fixation pour garde-boue d'une machine agricole en particulier garde-boue avant de tracteur

(30) Priority: 22.10.1997 IT MI972378
(43) Date of publication of application: 06.05.1999
(73) Proprietor: Lodi Luigi & Figli S.r.l., 42042 Fabbrico (Reggio Emilia) (IT)
(72) Inventor: Lodi, Enzo, 42042 Fabbrico, Reggio Emilia (IT); Lodi, Elios, 42042 Fabbrico, Reggio Emilia (IT)
(74) Representative: De Gregori, Antonella

(56) References cited:
- EP-A- 0 411 262
- US-A- 5 123 770
- US-A- 5 169 167

## Description

The present invention refers to a device for supporting the mudguard of an agricultural machine, in particular the front mudguard of a tractor.

As known, the agricultural machines can move on particularly rough grounds so that the wheels on one side of the machine can run over a plane different from the one where the wheels of the other side run. In particular during the ploughing, the tractors work with the first side wheels which run over the unploughed ground while the second side wheels run over the previously made furrow.

Especially in the case of deep ploughings, the wheels which run in the furrow are very close to the vertical wall of the furrow. In this case, the contact between the corresponding mudguard and said wall and in particular between the mudguard edge and said wall is usually unavoidable. The consequent impact, especially if repeated, causes the damaging of the mudguard and/or of the supporting device which fixes said mudguard to the frame of the tractor, usually through the axle.

US-A-5,169,167, which discloses the features of the preamble of claim 1, relates to a tractor front fender assembly for an agricultural tractor including an arcuate mounting bracket.

The purpose of the present invention is to overcome the above indicated disadvantage, i.e. to provide a device for supporting the mudguard of an agricultural machine, in particular the front mudguard of a tractor to avoid said impacts or, at least, to limit the damages as much as possible in order to reduce the operating costs and to improve the working capacity of the machines.

Said purposes are achieved by a device according to claim 1.

Shortly, the invention discloses how to realise two concentric peripheral guides, having the centre on the rotation axis of the wheel, along said guides it is possible to fix either the portion suitable to be fixed to the vehicle mudguard or the portion suitable to be fixed to the vehicle axle, so as that the mudguard can be positioned, according to need, back or forth on the corresponding wheel and can maintain the same distance from said wheel without jeopardising its function. In this way, during the passage over particularly rough grounds, the mudguard can be positioned along the wheel in the position which, at that time, is the most adequate to avoid impacts with the ground. Meanwhile, since the distance between the mudguard and the wheel stays the same, the working capacity of the mudguard is not affected.

The invention is shown, through a non limiting example, in the figures of the attached drawings which refer in particular to a device according to the invention of the type suitable to be used on the front mudguard of a tractor and wherein the first and the second guide have the centre on the rotation axis of the wheel and are integral with the portion suitable to be fixed to the vehicle mudguard.

It is clear that the invention can be substantially applied to other machines and/or vehicles which have the same need and therefore not only to the agricultural machines.
Figure 1 is a side view of the device mounted on the front axle of a tractor.
Figure 2 is a cross section view along the line II-II of figure 1.
Figure 3 shows a detail.

Referring to the above mentioned figures, the device, generally indicated by 1, for supporting the mudguard of an agricultural machine is of the type suitable to support the front mudguard 2 of a tractor (not shown). The device 1 substantially comprises a portion 3 suitable to be fixed to the tractor axle 4, a portion 5 suitable to be fixed to the mudguard 2 and an interposed portion 6. In the specific case of the example, the portion 3 suitable to be fixed to the tractor axle 4 comprises a couple of parallel rods 7 provided with a plurality of couples of through holes 8 in order to fix the device 1 in a predefined position through a couple of screws 9.

As shown in the figures, the predefined position can, nonetheless, be changed in function of the couple of holes 8 engaged by the couple of screws 9 for the locking in place. The portion 5 suitable to be fixed to the vehicle mudguard 2 is realised by means of a first 10 and a second 11 pipe welded together at a right angle.

The first pipe 10 is centrally fixed to the mudguard while the second pipe 11 is fixed, through a couple of bolts 12, to the interposed portion 6.

Also in this case, the predefined position can be changed in function of the couple of holes 13 engaged by the couple of bolts 12 which are, anyhow, placed at the ends of the portions which are connected by said bolts in order to avoid the formation of a hinge which would jeopardise the working capacity of the device 1.

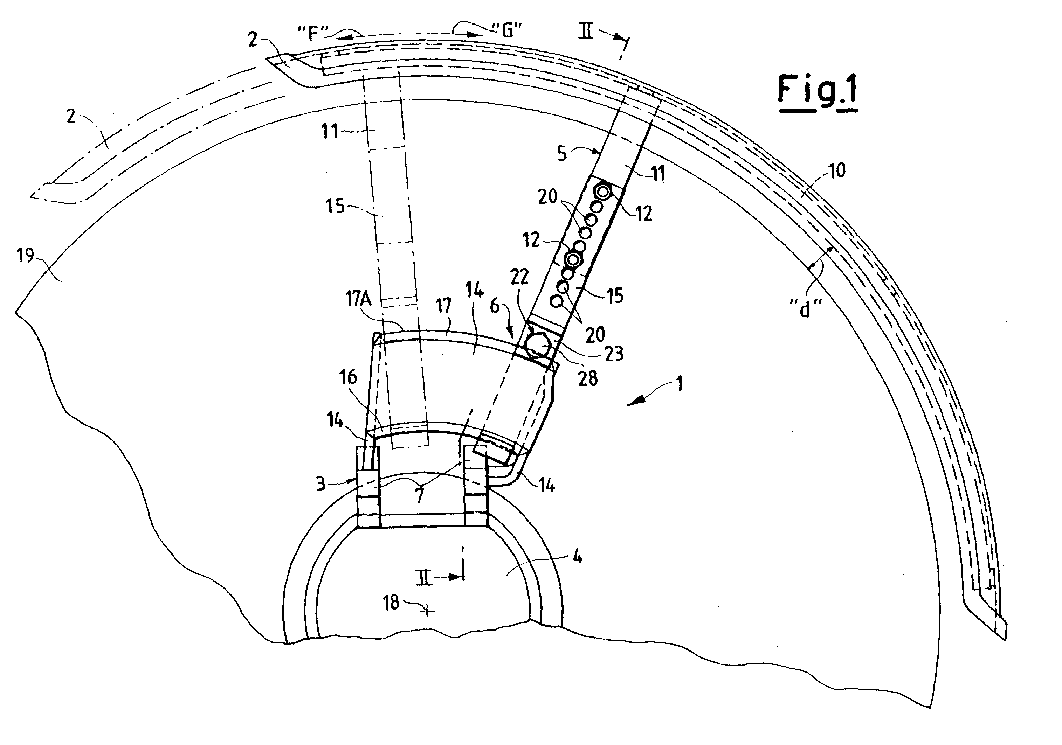

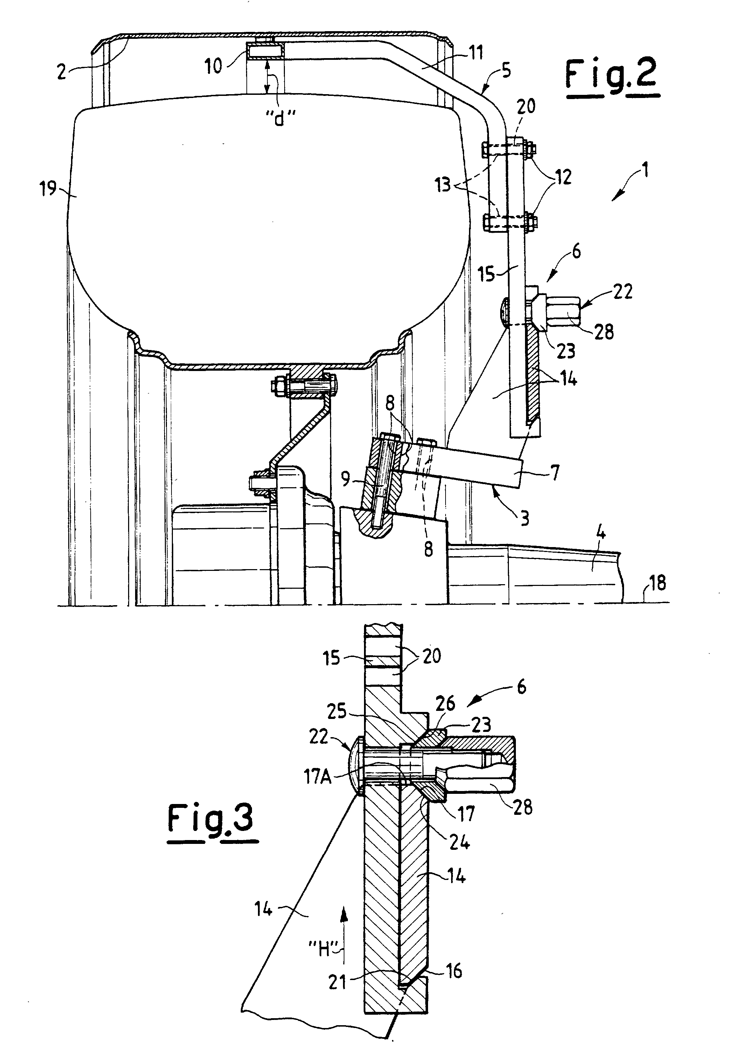

The interposed portion 6 comprises two portions: a portion which, when the device 1 is working, is positioned in the lower part (and therefore is defined lower portion 14) and a portion which, when the device 1 is working, is positioned in the upper part (and therefore is defined upper portion 15). With particular reference to figure 3, the lower portion 14 comprises a first 16 and a second 17 guide which extend along a first and a second portion of circumference having the centre on the rotation axis 18 of the wheel 19 whereto the mudguard 2, supported by the device 1, is associated. The upper portion 15 is substantially formed by a bar which, at the upper end, has the holes 20 (which coincide with the holes 13) which are engaged by the couple of bolts 12 and, at the second end, has a first counter-guide 21 suitable to engage the first guide 16. The upper portion can be fixed to the lower portion 14 by means of a through bolt 22 which drives a wedge 23. The wedge 23 has the second counter-guide 24 and a first inclined plane 25 intended to abut against a second inclined plane 26 positioned on the upper portion 15. When the bolt 22 is loose, the first guide 16 and the first counter-guide 21 are not in contact because of the force of gravity. However, the hook shape of the lower end of the portion 15 does not allow the complete disengagement of the upper portion 15 from the lower portion 14 thus also making the device 1 safe to use. The second guide 17 and the second counter-guide 24 are not in contact. The first inclined plane 25 is not in contact with the second inclined plane 26. The side surface of the screw of the bolt 22 abuts against the portion, indicated by 17A, of the second guide 17, of the lower portion (14). It is possible to drive the mudguard 2 and move it along the directions indicated by the arrows "F" and "G" in figure 1 so that the mudguard will be in the most suitable position to avoid impacts with the ground. In any of the reachable positions, the distance "d" between the mudguard 2 and the wheel 19 stays the same in order to maintain unchanged the working capacity of the mudguard. Once the desired position is reached, the bolt 22 is tightened. By screwing the nut 28, the initial engagement of the second counter-guide 24 with the second guide 17 is obtained. The portion 15 moves along a vertical direction (arrow "H") up to the engagement between the first counter-guide 21 and the first guide 16.

At the same time, the first 25 and the second 26 inclined plane abut against each other thus avoiding the screw of the bolt 22 from being subjected to dangerous bending stresses due to the tightening operation. The structure is therefore also simple and strong. Simple, since it is sufficient to tighten just one bolt in order to have the mudguard stable in the desired position. Strong, since, notwithstanding the use of inclined planes or surfaces, the stresses are distributed among the elements always according to the directions along which the elements guarantee the maximum resistance.

In order to better understand the structures of the device according to the invention, it has to be noted that usually the agricultural machines and in particular the tractors, which are the specific subject of the invention, undergo strong vibrations which have a significant increase in amplitude on the large projecting surfaces as the mudguards.

Therefore the invention has solved the technical problem of realising a supporting device which is able to cope with strong vibrations and which, at the same time, can lock fixedly the mudguard using just one bolt.

## Claims

1. Supporting device (1) for the mudguard of an agricultural machine in particular the front mudguard (2) of a tractor, said device comprises a portion (3) fixed to the tractor axle (4) and a portion (5) fixed to the vehicle mudguard (2) wherein between said two portions (3, 5) there is an interposed portion (6) provided with a first (16) guide which extends along a first portion of circumference and which has the centre on the rotation axis (18) of the wheel (19) whereto the mudguard (2), supported by the device (1), is associated, said first (16) guide is respectively engaged to a first (21) counter-guide integral with the portion (3) fixed to the vehicle axle (4), therefore said portion (5), fixed to the mudguard (2) of the vehicle, can be locked in a circumferentially predefined position along said first counter-guide (21) through screw means (22), thus maintaining unchanged the distance ("d") of the mudguard (2) from the wheel (19), **characterised in that** there are also provided a second guide (17), which extends along a second portion of circumference, and a second counter-guide (24) engaged to said first guide (16) and said first counter-guide (21), wherein said interposed portion (6) comprises an upper portion (15) and a lower portion (14) and that said second guide (17) is provided on said lower portion (14).

2. Device as claimed in claim 1, **characterised in that** the portion (3) fixed to the axle (4) comprises a couple of parallel rods (7) provided with a plurality of couples of through holes (8) which can be engaged by means of a couple of screws (9).

3. Device as claimed in claim 1, **characterised in that** the portion (5) fixed to the vehicle mudguard (2) is realised by means of a first (10) and of a second (11) pipe welded together at a right angle, said first pipe (10) is centrally fixed to the mudguard while the second pipe (11) is fixed, through a couple of bolts (12), to the interposed portion (6).

4. Device as claimed in claim 1, **characterised in that** the lower portion (14) comprises said first (16) and second (17) guides which extend respectively along said first and second portions of circumference and which have the centre on the rotation axis (18) of the wheel (19) whereto the mudguard (2) is associated, the upper portion (15) is formed by a bar which has, at the upper end, the holes (20), which coincide with the holes (13) engaged by the couple of bolts (12), and which has, at the second end, said first counter-guide (21) suitable to engage the first guide (16), the upper portion (15) can be fixed to the lower portion (14) by means of a through bolt (22) which drives a wedge (23) which has the second counter-guide (24) and a first inclined plane (25) intended to abut against a second inclined plane (26) positioned on the upper portion (15).

5. Device as claimed in claim 1, **characterised in that** the first (16) and the second (17) guide and the first (21) and the second (24) counter-guide comprise planes convergent with one another.

## Patentansprüche

1. Halterung (1) für den Kotflügel einer landwirtschaftlichen Maschine, insbesondere den vorderen Kotflügel (2) eines Traktors, mit einem Abschnitt (3), der an der Traktorachse (4) befestigt ist, und einem Abschnitt (5), der am Kotflügel (2) des Fahrzeugs befestigt ist, wobei zwischen diesen beiden Abschnitten (3, 5) ein Zwischenabschnitt (6) vorhanden ist, der mit einer ersten Führung (16) versehen ist, welche sich entlang eines ersten Umfangsabschnittes erstreckt und seinen Mittelpunkt auf der Drehachse (18) des Rades (19) hat, dem der von der Halterung (1) getragene Kotflügel (2) zugeordnet ist, wobei diese erste Führung (16) jeweils mit einer ersten Gegenführung (21) in Eingriff steht, die mit dem an der Fahrzeugachse (4) befestigten Abschnitt (3) einstöckig ist, sodass der am Kotflügel des Fahrzeugs befestigte Abschnitt (5) in einer in Umfangsrichtung vorbestimmten Stellung entlang der ersten Gegenführung (21) mittels Schraubeinrichtungen (22) verriegelbar ist, sodass der Abstand ("d") des Kotflügels (2) vom Rad (19) unverändert aufrechterhalten wird, **dadurch gekennzeichnet, dass** auch eine zweite Führung (17) vorgesehen ist, die sich entlang eines zweiten Umfangsabschnittes erstreckt, und eine zweite Gegenführung (24), die mit der ersten Führung (16) und der ersten Gegenführung (21) in Eingriff steht, wobei der Zwischenabschnitt (6) einen oberen Abschnitt (15) und einen unteren Abschnitt (14) aufweist, und dass die zweite Führung (17) an dem unteren Abschnitt (14) vorgesehen ist.

2. Halterung nach Anspruch 1, **dadurch gekennzeichnet, dass** der an der Achse (4) befestigte Abschnitt (3) ein Paar parallele Stangen (7) aufweist, die mit mehreren Paaren Durchgangslöcher (8) versehen sind, in welche ein Paar Schrauben (9) einsetzbar ist.

3. Halterung nach Anspruch 1, **dadurch gekennzeichnet, dass** der am Kotflügel (2) des Fahrzeugs befestigte Abschnitt (5) mittels eines ersten Rohrs (10) und eines zweiten Rohrs (11) verwirklicht ist, die unter einem rechten Winkel zusammengeschweißt sind, wobei das erste Rohr (10) mittig am Kotflügel befestigt ist, während das zweite Rohr (11) mittels eines Paars Schrauben (12) am Zwischenabschnitt (6) befestigt ist.

4. Halterung nach Anspruch 1, **dadurch gekennzeichnet, dass** der untere Abschnitt (14) die erste und die zweite Führung (16, 17) aufweist, die sich entlang des ersten bzw. zweiten Umfangsabschnitts erstrecken, und die ihren Mittelpunkt auf der Drehachse (18) des Rades (19) haben, dem der Kotflügel (2) zugeordnet ist, dass der obere Abschnitt (15) von einer Stange gebildet ist, die am oberen Ende die Löcher (20) hat, welche mit den Löchern (13) fluchten, in die das Paar Schrauben (12) eingreift, und die am zweiten Ende die erste Gegenführung (21) aufweist, die mit der ersten Führung (16) in Engriff bringbar ist, dass der obere Abschnitt (15) am unteren Abschnitt (14) mittels einer Durchgangsschraube (22) zu befestigen ist, welche einen Keil (23) antreibt, der die zweite Gegenführung (24) und eine erste geneigte Ebene (25) aufweist, die dazu bestimmt ist, an einer zweiten geneigten Ebene (26) anzuliegen, welche am oberen Abschnitt (15) positioniert ist.

5. Halterung nach Anspruch 1, **dadurch gekennzeichnet, dass** die erste und die zweite Führung (16, 17) sowie die erste und die zweite Gegenführung (21, 24) miteinander konvergierende Flächen aufweisen.

## Revendications

1. Dispositif de support (1) pour le garde-boue d'une machine agricole, en particulier le garde-boue avant (2) d'un tracteur, ledit dispositif comprenant une partie (3) fixée à l'essieu du tracteur (4) et une partie (5) fixée au garde-boue du véhicule (2), dans lequel entre lesdites deux parties (3, 5) se trouve une partie intercalée (6) munie d'un premier guide (16) qui s'étend le long d'une première partie de la circonférence et dont le centre se situe sur l'axe de rotation (18) de la roue (19) à laquelle le garde-boue (2), supporté par le dispositif (1), est associé, ledit premier guide (16) est respectivement engagé dans un premler contre-guide (21) faisant partie Intégrante de la partie (3) fixée à l'essieu du véhicule (4), redite partie (5) fixée au garde-boue du véhicule (2) peut en conséquence être calée dans une position circonférentiellement prédéfinie le long dudit premier contre-guide (21) par des moyens de vissage (22), maintenant ainsi inchangée la distance (« d ») entre le garde-boue (2) et la roue (19), **caractérisé en ce qu'**un second guide (17), qui s'étend le long d'une seconde partie de la circonférence, et un second contre-guide (24) engagé dans ledit premier guide (16) et dans redit premier contre-guide (21), sont aussi prévus, dans lequel ladite partie intercalée (6) comprend une partie supérieure (15) et une partie inférieure (14) et ledit second guide (17) est prévu sur ladite partie inférieure (14).

2. Dispositif selon la revendication 1, **caractérisé en ce que** la partie (3) fixée à l'essieu (4) comprend une paire de tiges parallèles (7) munies d'une pluralité de paires de trous passants (8) et qui peuvent être fixées au moyen d'une paire de vis (9).

3. Dispositif selon la revendication 1, **caractérisé en ce que** la partie (5) fixée au garde-boue du véhicule (2) est réalisée au moyen d'un premier (10) et d'un second (11) tubes soudés ensemble à angle droit, ledit premier tube (10) est centralement fixé au garde-boue tandis que le second tube (11) est fixé, au moyen d'une paire de boulons (12), à la partie intercalée (6).

4. Dispositif selon la revendication 1, **caractérisé en ce que** la partie inférieure (14) comprend lesdits premier (16) et second (17) guides qui s'étendent respectivement le long desdites première et seconde parties de la circonférence et dont le centre se situe sur l'axe de rotation (18) de la roue (19) à laquelle le garde-boue (2) est associé, la partie supérieure (15) est formée par une barre qui a, à son extrémité supérieure, des trous (20), qui coïncident avec les trous (13) dans lesquels s'engagent la paire de boulons (12), et qui a, à la seconde extrémité, ledit premier contre-guide (21) adapté de manlère à s'engager dans le premier guide (16), la partie supérieure (15) peut être fixée à la partie inférieure (14) au moyen d'un boulon traversant (22) qui entraîne une cale de blocage (23) qui a le second contre-guide (24) et un premier plan incliné (25) destiné à être contigu à un second plan incliné (26) positionné sur la partie supérieure (15).

5. Dispositif selon la revendication 1, **caractérisé en ce que** le premier (16) et le second (17) guides et le premler (21) et le second (22) contre-guides comprennent des plans convergents l'un vers l'autre.
